Europäisches Patentamt

European Patent Office

Office européen des brevets

(11) Numéro de publication: **0 385 838**
**A1**

## (12) DEMANDE DE BREVET EUROPEEN

(21) Numéro de dépôt: **90400519.6**

(22) Date de dépôt: **26.02.90**

(51) Int. Cl.⁵: **A47C 5/12**

(30) Priorité: **01.03.89 FR 8902679**

(43) Date de publication de la demande:
**05.09.90 Bulletin 90/36**

(84) Etats contractants désignés:
**BE CH DE ES GB GR IT LI NL SE**

(71) Demandeur: **GROSFILLEX S.A.R.L. Société à responsabilité limitée dite :**
**Arbent**
**F-01107 Oyonnax(FR)**

(72) Inventeur: **Guichon, Jean-Paul**
**Pratz**
**F-39170 Saint Lupicin(FR)**

(74) Mandataire: **Caunet, Jean et al**
**Cabinet BEAU DE LOMENIE 55, rue d'Amsterdam**
**F-75008 Paris(FR)**

(54) **Siège monolithique en matière plastique injectée.**

(57) Le siège comprend une assise (1) avec nervures sous-jacentes de raidissement (7 à 13), faisant corps avec quatre pieds (5, 6), un dossier (2) et éventuellement des accoudoirs (4),

Suivant l'invention, l'assise (1) comporte :
- dans la zone médiane de sa face inférieure et jusqu'à proximité de l'arrondi de raccordement (3) avec son dossier (2), un prolongement saillant (15) de la nervure arrière (10) s'étendant en pente pour le gerbage,
- et dans sa face supérieure une ouverture (16) destinée à recevoir le prolongement saillant du ou des sièges gerbés au-dessus,

la partie la plus basse du prolongement saillant (15) étant éloignée de l'assise (1) d'une distance suffisante pour que le moule puisse être équipé sous l'empreinte délimitant cet arrondi (3), d'un passage pour une buse chaude d'injection et de conduits pour le refroidissement.

Fig. 1

## Siège monolithique en matière plastique injectée.

La présente invention concerne un siège monolithique en matière plastique injectée.

Ce siège comporte, s'il s'agit d'une chaise, une assise, un dossier et quatre pieds avec en plus, s'il s'agit d'un fauteuil, deux accoudoirs.

Afin d'assurer le raidissement du siège, l'assise présente une ceinture généralement double de nervures sous-jacentes faisant corps avec les pieds.

De tels sièges sont gerbables pour leur transport sous forme de pile emmaillotée et leur stockage. A cet effet, les pieds sont légèrement inclinés par rapport à la verticale et la hauteur saillante des nervures est limitée par le pas de gerbage.

L'injection du siège est avantageusement réalisée au moyen d'une buse ou transfert chaud traversant de façon escamotable la partie fixe du moule, partie fixe qui délimite notamment au voisinage de ladite buse des conduits branchés sur un circuit de refroidissement.

Une première technique de moulage consiste à injecter la matière derrière l'arrondi de raccordement de l'assise avec le dossier. L'inconvénient est que des défauts d'aspect apparaissent à cet endroit sur le siège fini.

Pour remédier à cet inconvénient, une deuxième technique de moulage consiste à injecter la matière en bas de la nervure postérieure. Dans ce cas, une difficulté majeure apparaît pour loger dans la partie fixe du moule sous l'empreinte délimitant l'arrondi de raccordement, le passage de la buse chaude et les conduits de refroidissement. Pour surmonter cette difficulté de façon satisfaisante, il faut que la hauteur des nervures dépasse une certaine valeur limite. Dans ce cas, des défauts d'aspect peuvent apparaître, mais cela n'est pas gênant puisqu'ils sont en principe localisés à un endroit dissimulé à la vue.

De toute façon, le manque d'espace est évident lorsque, pour des raisons diverses et notamment pour accroître la capacité d'empilage, la hauteur des nervures est réduite en correspondance avec le pas de gerbage.

La présente invention a pour but de remédier à cet inconvénient en accroissant la distance du point d'injection à l'arrondi de raccordement de l'assise au dossier tout en limitant la hauteur du nervurage et même en le réduisant. Concomitamment, elle vise à améliorer la qualité du produit injecté et son aspect, à favoriser l'écoulement de l'eau de pluie pour qu'elle ne stagne pas sur l'assise, à rendre commode le portage d'un siège, voire de plusieurs sièges gerbés, avec un seul bras et de façon équilibrée, parfois à rigidifier la structure malgré la réduction de son épaisseur.

Dans ce but et conformément à l'invention, l'assise comporte :

- dans la zone médiane de sa face inférieure et jusqu'à proximité de l'arrondi de raccordement avec son dossier, un élément saillant en pente pour le gerbage,

- et dans sa face supérieure en regard de cet élément saillant, un élément creux destiné à recevoir l'élément saillant du ou des sièges gerbés au-dessus,

la partie la plus basse dudit élément saillant étant éloignée de l'assise d'une distance suffisante pour que le moule puisse être équipé, sous l'empreinte délimitant l'arrondi de raccordement précité, d'un passage pour une buse chaude d'injection et de conduits pour le refroidissement.

Suivant une première forme de réalisation, l'élément saillant est un prolongement descendant médian d'une nervure transversale arrière de l'assise, délimitant l'avant d'une ouverture s'étendant vers l'arrière et constituant l'élément creux précité qui permet l'écoulement de l'eau ainsi que la préhension du siège, le prolongement étant en pente pour permettre le gerbage du siège considéré sur un siège sous-jacent dont l'ouverture livre passage à ce prolongement dudit siège considéré, le bord inférieur dudit prolongement, plus éloigné de l'arrondi de raccordement que le bord parallèle de l'ouverture étant le siège de l'injection.

Suivant une deuxième forme de réalisation, l'élément saillant est un pli antéro-postérieur médian de l'assise profilé sensiblement en V tronqué et délimitant dans son dessus une gouttière qui constitue l'élément creux précité, la partie postérieure la plus basse de ce pli étant le siège de l'injection.

Une lumière est ménagée dans le fond du pli pour l'écoulement de l'eau et la préhension de ce siège.

Le pli est formé avec une paroi postérieure dont la partie basse est le siège de l'injection, ce pli s'étendant de l'avant vers l'arrière avec une profondeur croissante.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :

- la figure 1 est une perspective illustrant pour un fauteuil une première forme de réalisation d'un perfectionnement qui lui est apporté selon l'invention,

- la figure 2 est une élévation latérale de ce fauteuil,

- la figure 3 est une vue en plan de dessus du fauteuil,

- la figure 4 est une coupe prise suivant la ligne IV-IV de la figure 3,

- la figure 5 est une vue analogue à la figure 2 illustrant une deuxième forme de réalisation d'un perfectionnement selon l'invention,

- la figure 6 est une coupe analogue à la figure 4 concernant cette deuxième forme de réalisation,

- la figure 7 est une section prise suivant la ligne VII-VII de la figure 5,

- la figure 8 est un schéma montrant la partie du moule d'injection concernée par l'invention.

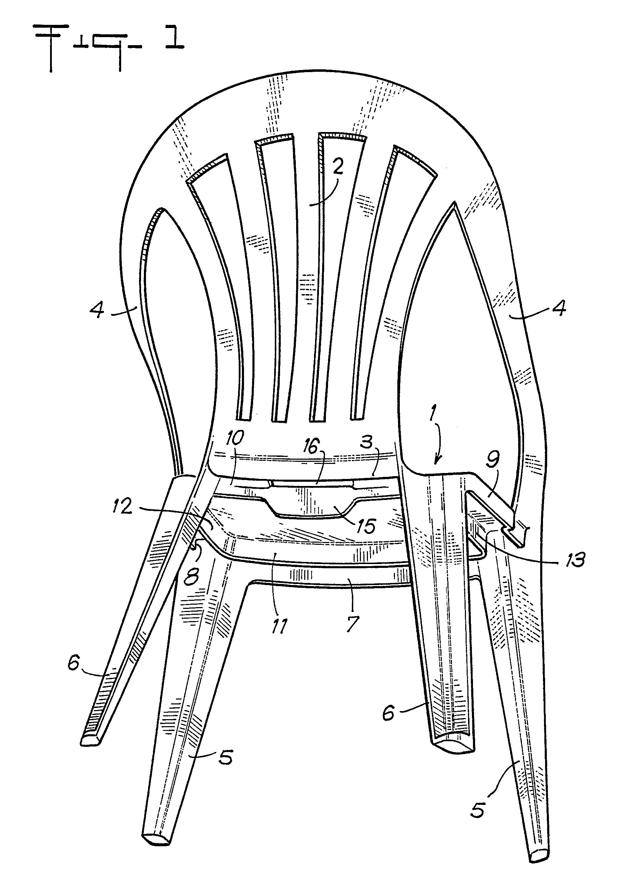

Comme le montre la figure 1, le fauteuil auquel le perfectionnement de l'invention est appliqué, comporte une assise 1 et un dossier 2 reliés entre eux par un arrondi de raccordement 3, le dossier 2 étant prolongé latéralement par des accoudoirs 4. L'assise 1 fait corps avec des pieds antérieurs 5 profilés en cornières ouvertes sur les côtés et vers l'avant, ainsi qu'avec des pieds postérieurs 6 profilés en cornières ouvertes sur les côtés et vers l'arrière. L'assise 1 comporte des rebords périphériques avant 7, et latéraux 8, 9, ainsi que des nervures arrières 10, avant 11 et latérales 12, 13, ces rebords et nervures sous-jacentes de l'assise faisant corps également avec les pieds.

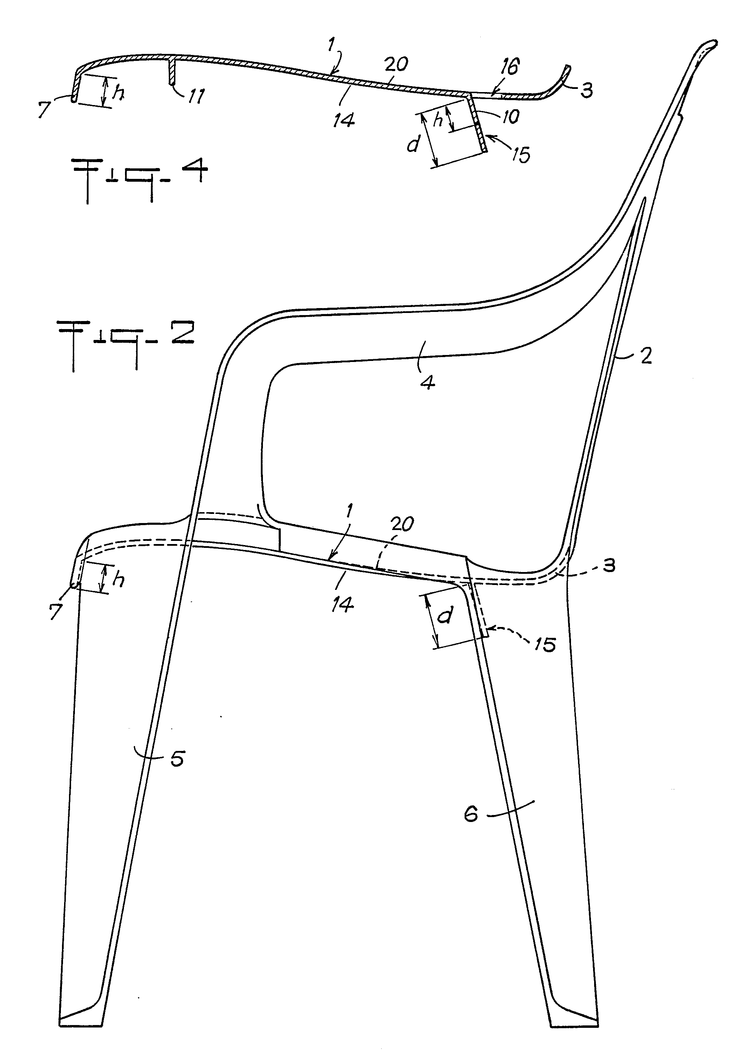

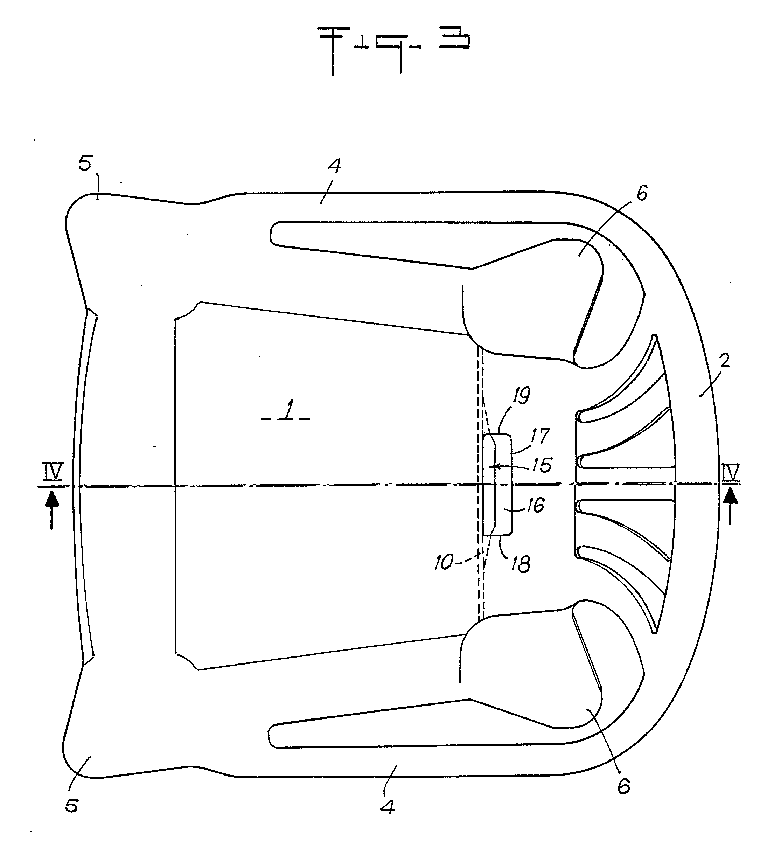

Suivant la première forme de réalisation illustrée par les figures 1 à 4, l'assise 1 comporte en saillie sur sa face inférieure 14 la nervure arrière 10 qui d'étend à une certaine distance de l'arrondi 3 et présente en proéminence dans sa zone médiane un prolongement trapézoïdal descendant 15. Ce prolongement borde l'avant d'une ouverture transversale 16 relativement étroite dont le bord arrière 17 est proche de l'arrondi 3. Cette ouverture 16 débouche sur la face supérieure 20 de l'assise et remplit quatre fonctions :

- la première qui est de permettre le gerbage de tels sièges en livrant passage au prolongement saillant 15 du siège sus-jacent.

- la deuxième qui est d'évacuer l'eau de pluie ruisselant sur l'assise,

- la troisième qui est de favoriser la préhension du siège à l'endroit du meilleur équilibre pour le déplacer d'une main en livrant passage à cette main qui peut aisément prendre l'arrondi 3 en son milieu pour s'en servir comme poignée.

Bien entendu, pour que le prolongement saillant 15 puisse pénétrer sans coincement dans l'ouverture 16 du siège sous-jacent lors du gerbage, il faut que ledit arceau ait la même pente que les "facettes dites verticales" du fauteuil et en particulier celle de la nervure 10.

Les facettes correspondent à une illustration schématique d'un fauteuil ; certaines facettes dites verticales correspondent aux pieds, au dossier, aux accoudoirs, aux rebords et nervures de l'assise ... tandis que d'autres facettes dites horizontales correspondent à l'assise, aux rebords des facettes verticales ... Pour que de tels fauteuils soient gerbables, il faut en particulier que les lignes de plus grande pente des "facettes dites verticales" forment un angle d'emboîtement particulier par rapport à la verticale ; cet angle détermine le pas de gerbage lorsque les "facettes dites verticales" des fauteuils gerbés sont en contact les unes avec les autres.

Ainsi, le prolongement saillant 15 de la nervure 10 est pentu suivant cet angle et est par conséquent emboîtable dans les ouvertures 16 sous-jacentes lors du gerbage.

La quatrième fonction est très importante puisqu'elle favorise considérablement l'injection. En effet, du fait que le prolongement 15 est bien plus haut que la nervure arrière 10 de l'assise (figure 1), nervure où se situe jusqu'à présent le point d'injection 21, ce point d'injection peut être éloigné de l'assise 1 d'une distance suffisante pour que les moyens d'injection décrits ci-après en se référant à la figure 8 puissent prendre place dans le moule.

Comme le montre schématiquement la figure 8, le moule est en général en trois parties 22 à 24. La partie 22 est fixe et présente une empreinte définissant notamment la facette verticale arrière du dossier 2 et des pieds postérieurs 6. La partie 23 est déplaçable dans le sens de la flèche F et présente une empreinte définissant notamment la facette verticale avant du dossier 2 et des pieds antérieurs 5 ainsi que la facette horizontale supérieure de l'assise 1. La partie 24 est déplaçable dans le sens de la flèche F et présente une empreinte définissant notamment les facettes verticales avant des pieds postérieurs 6 et arrière des pieds antérieurs 5 ainsi que la facette horizontale inférieure de l'assise 1, cette partie 24 comportant des éjecteurs déplaçables dans le sens de la flèche G.

Pour démouler un fauteuil, il faut d'abord déplacer la partie 23 dans le sens de la flèche F pour la déboîter du fauteuil restant prisonnier des parties 21 et 24, il faut ensuite déplacer la partie 24 dans le sens de la flèche F pour démouler de la partie 22 le fauteuil restant prisonnier de la partie 24, il faut enfin déplacer les éjecteurs dans le sens de la flèche G pour démouler le fauteuil de cette partie 24.

Cette description du moule est simplifiée et sommaire car son seul intérêt est de faire comprendre l'exposé qui suit. En particulier, peu importe l'organisation et le fonctionnement du moule sur les côtés.

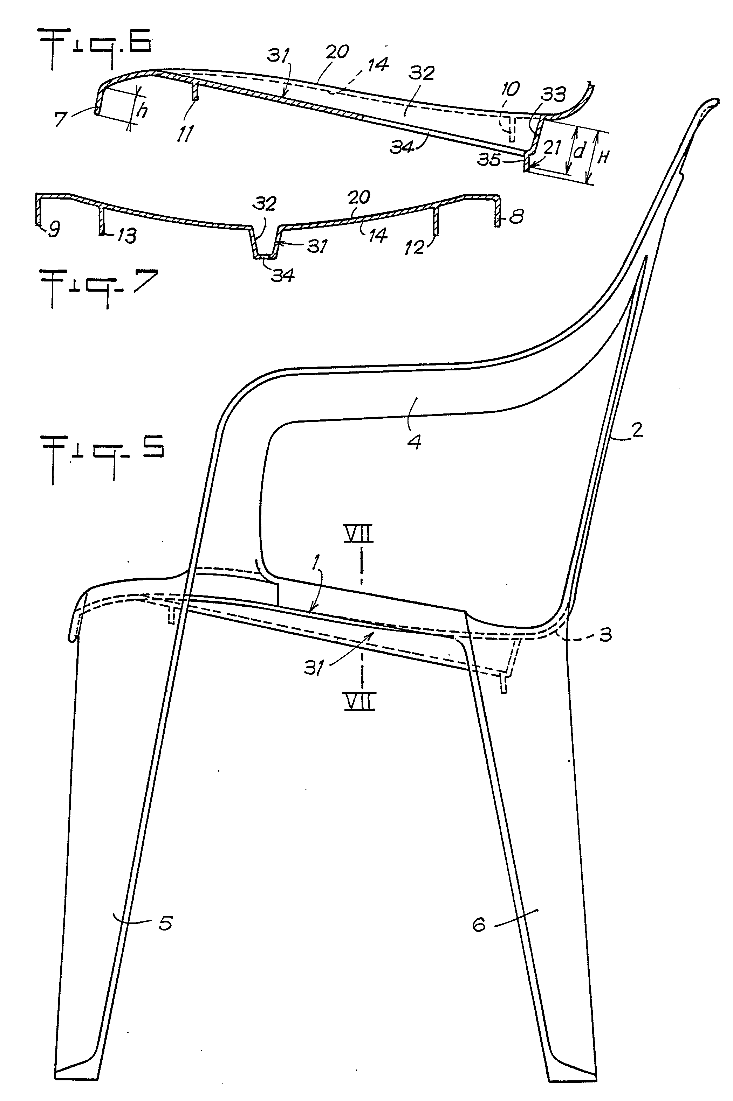

Ainsi, l'empreinte globale 25 du prolongement saillant 15 est délimitée par les parties 22 et 24 et au moins un point d'injection 21 est situé en bas de cette empreinte à une distance "d" de l'empreinte 26 de l'assise, plus grande que la hauteur moyenne h (figures 2 et 4) des rebords et nervures de ladite assise.

Dès lors, au moins une buse chaude d'injection 27 s'étend dans un passage 28 de la partie 22 du moulé, passage qui est situé relativement bas par rapport à l'empreinte 26 et il subsiste dans la dite partie 22 du moule entre cette empreinte et le passage 28 une masse de matière conductrice 29 suffisamment volumineuse pour qu'il soit aisé d'y ménager des conduits de refroidissement 30.

Il résulte de ce perfectionnement constitué par le prolongement saillant 15, que l'injection peut s'effectuer dans d'excellentes conditions et sans défauts apparents.

Bien entendu les bords antéropostérieurs 18, 19 de l'ouverture 16, au lieu d'être francs comme le bord arrière 17, peuvent être définis par des ailes triangulaires non représentées, faisant corps avec la nervure 10 et son prolongement 15 en saillie sur la face inférieur 14 de l'assise 1.

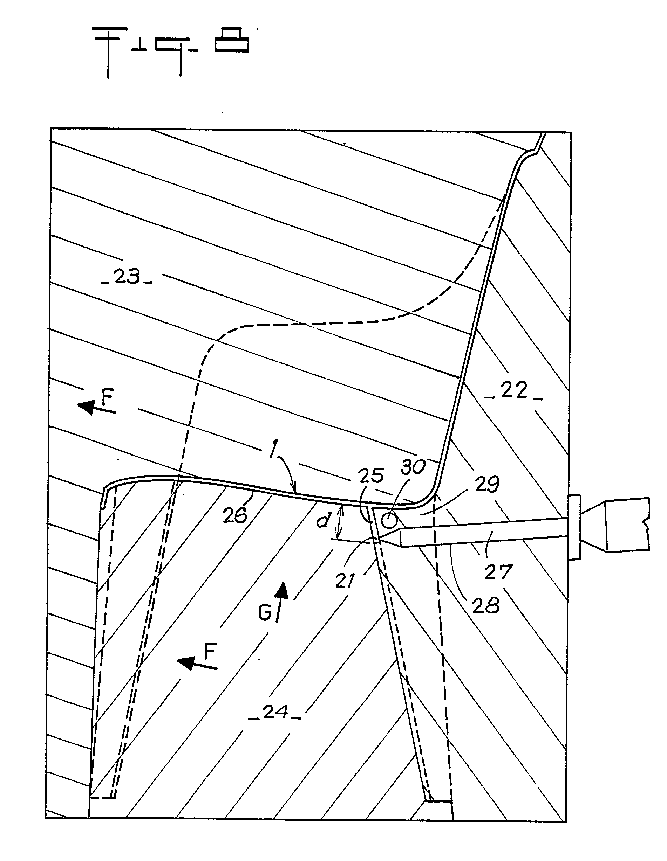

Suivant la deuxième forme de réalisation illustrée par les figures 5 à 7, l'assise 1 comporte un pli 31 s'étendant dans la direction médiane antéropostérieure. Ce pli est conformé en V tronqué et délimite sur la face supérieure 20 de l'assise une gouttière 32 dont la profondeur est plus profonde à l'arrière qu'à l'avant. Il délimite dans son fond près de sa paroi postérieure 33 une lumière 34 destinée, à permettre, d'une part l'évacuation de l'eau canalisée par la gouttière 32 et, d'autre part, à former une poignée de préhension.

Le pli 31 fait saillie sur la face inférieure 14 de l'assise sur une hauteur H supérieure, comme dans la réalisation précédente et pour la même raison, à la hauteur h des rebords et nervures de l'assise. Les plis 31 de fauteuils gerbés s'emboîtent donc les uns dans les autres, ce qui permet de réduire le pas de gerbage ou tout au moins de ne pas l'accroître alors que la distance d du point d'injection 21 à l'assise 1 est augmentée.

En effet, le point d'injection 21 est situé en bas de la paroi postérieure 33 du pli 31 ou mieux en bas de la nervure 35 qui la prolonge. D'autres nervures transversales peuvent d'ailleurs être prévues sur la longueur du pli 31.

Bien entendu et ainsi que cela ressort de la figure 4, le rebord 10 de l'assise 1 fait corps avec les ailes 18 et 19 de l'arceau 15. De même et ainsi que cela ressort de la figure 6, le rebord postérieur 10 et la nervure antérieure 11 font corps avec le pli 31.

## Revendications

1.- Siège monolithique en matière plastique injectée, tel qu'une chaise ou un fauteuil, moulable sans défauts visibles et comprenant une assise (1) avec nervures sous-jacentes de raidissement (7 a 13), faisant corps avec quatre pieds (5, 6), un dossier (2) et éventuellement des accoudoirs (4), caractérisé en ce que l'assise (1) comporte :
- dans la zone médiane de sa face inférieure (14) et jusqu'à proximité de l'arrondi de raccordement (3) avec son dossier (2), un élément saillant (15 ; 31) en pente pour le gerbage,
- et dans sa face supérieure (20) en regard de cet élément saillant, un élément creux (16 ; 32) destiné à recevoir l'élément saillant du ou des sièges gerbés au-dessus,
la partie la plus basse dudit élément saillant étant éloignée de l'assise d'une distance d suffisante pour que le moule puisse être équipé, sous l'empreinte (26) délimitant l'arrondi de raccordement précité, d'un passage (28) pour une buse chaude d'injection (27) et de conduits (30) pour le refroidissement.

2.- Siège selon la revendication 1, comportant une nervure transversale arrière (10) qui s'étend parallèlement à l'arrondi de raccordement (3) précité et caractérisé en ce que l'élément saillant est un prolongement descendant médian (15) de la nervure (10) délimitant l'avant d'une ouverture (16) s'étendant vers l'arrière et constituant l'élément creux précité qui permet l'écoulement de l'eau et la préhension du siège, le prolongement (15) étant en pente pour permettre le gerbage du siège considéré sur un siège sous-jacent dont l'ouverture (16) livre passage à ce prolongement dudit siège considéré, le bord inférieur dudit prolongement, plus éloigné de l'arrondi de raccordement que le bord parallèle de l'ouverture, étant le siège (21) de l'injection.

3.- Siège selon la revendication 1, caractérisé en ce que l'élément saillant est un pli antéropostérieur médian (31) de l'assise (1) profilé sensiblement en V tronqué et délimitant dans son dessus une gouttière (32) qui constitue l'élément creux précité, la partie postérieure la plus basse de ce pli étant le siège (21) de l'injection,

4.- Siège selon la revendication 3, caractérisé en ce qu'une lumière (34) est ménagée dans le fond du pli (31) pour l'écoulement de l'eau et la préhension de ce siège.

5.- Siège selon la revendication 3 ou 4, caractérisé en ce que le pli (3) est formé avec une paroi postérieure (33) dont la partie basse est le siège (21) de l'injection, ce pli s'étendant de l'avant vers l'arrière avec une profondeur croissante.

6.- Siège selon la revendication 5, caractérisé en ce que des nervures transversales (35) font saillie sous le pli (31).

7.- Siège selon la revendication 2 ou 3, caractérisé en ce que les nervures de raidissement (10 ; 10, 11) de l'assise (1), situées à l'arrière et éventuellement à l'avant, font corps avec l'élément saillant (15 ; 31).

Fig. 1

Fig.4

7   h   11   14   1   20   16   3   h   d   10   15

Fig.2

4   2

1   20   14   3   h   7   d   15   5   6

# Fig. 3

Fig.6

31  20  14  32  10  33

7  h  11

34  35  21  d  H

Fig.7

32  20  14

9  13  31  12  8

34

Fig.5

4  2

VII

1  3

31  VII

5  6

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 989 212 (JENNINGS) --- | | A 47 C 5/12 |
| A | DE-A-2 439 364 (RADEL) --- | | A 47 C 3/04 |
| A | US-A-3 459 449 (KLAUSEN) --- | | |
| A | CH-A- 305 066 (KNOLL) --- | | |
| A | FR-A-2 214 437 (PEL) --- | | |
| A | US-A-3 201 172 (BLISS) --- | | |
| A | US-A-3 768 863 (JENNINGS) ----- | | |

DOMAINES TECHNIQUES
RECHERCHES (Int. Cl.5)

A 47 C

**Le présent rapport a été établi pour toutes les revendications**

| Lieu de la recherche | Date d'achèvement de la recherche | Examinateur |
|---|---|---|
| LA HAYE | 18-05-1990 | VANDEVONDELE J.P.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P0402)